# EUROPEAN PATENT SPECIFICATION

(11) **EP 0 830 550 B1**
(45) Date of publication and mention of the grant of the patent: **18.09.2002**
(21) Application number: 96918339.1
(22) Date of filing: 07.06.1996
(51) Int. Cl.: F24J 3/08

(54) **SYSTEM FOR GEOTHERMAL PRODUCTION OF ELECTRICITY**
VERFAHREN ZUR UMWANDLUNG VON ERDWARME IN ELEKTRIZITAT
SYSTEME GEOTHERMIQUE DE PRODUCTION D'ELECTRICITE

(30) Priority: 07.06.1995 US 486704; 31.05.1996 US 650595
(43) Date of publication of application: 25.03.1998
(73) Proprietor: Shnell, James H., Santa Ana, CA 92705 (US)
(72) Inventor: Shnell, James H., Santa Ana, CA 92705 (US)
(74) Representative: Witte, Alexander, Dr.-Ing.
(86) International application number: PCT/US96/09522
(87) International publication number: WO 96/041104

(56) References cited:
- EP-A- 0 511 180
- GB-A- 2 058 935
- US-A- 4 002 729
- US-A- 4 192 371
- US-A- 4 372 386
- US-A- 4 927 856
- PATENT ABSTRACTS OF JAPAN vol. 9, no. 162 (M-394), 6 July 1985 & JP,A,60 035182 (SHIN NIPPON SEITETSU KK), 22 February 1985,
- PATENT ABSTRACTS OF JAPAN vol. 9, no. 88 (C-276), 17 April 1985 & JP,A,59 222225 (KOBE SEIKOSHO KK), 13 December 1984,
- PATENT ABSTRACTS OF JAPAN vol. 12, no. 241 (M-716), 8 July 1988 & JP,A,63 032110 (MITSUBISHI HEAVY IND LTD), 10 February 1988,
- PATENT ABSTRACTS OF JAPAN vol. 12, no. 312 (C-523), 24 August 1988 & JP,A,63 084629 (NIPPON STEEL CORP), 15 April 1988,

## Description

### Field of the Invention

This invention relates to the production of electricity by the use of geothermal heat, and more particularly to the use of geothermal heat to generate products of endothermic reaction by a catalytic device or electrolytic reaction by a thermocouple device.

### Background of the Invention

Current systems for the production of electricity from geothermal energy rely on the heat in the earth's crust to vaporize water or another liquid; the vapor is then used in a turbine to generate electricity. The geothermal heat is generally brought to the surface via wells that tap into reservoirs of steam or brine that circulate at depths in the crust sufficient to collect a substantial amount of heat. An example is found in U.S. Patent No. 3,786,858 (1974).

However, modern steam turbines operate most efficiently at very high temperatures, substantially higher than the temperatures achieved in the steam or brine reservoirs generally used to produce geothermal electricity. The heat present at depths within the earth that is attainable (for practical purposes) is not sufficiently concentrated. Geotharmally powered steam turbines are therefore less efficient. They are also limited in operation by the fact that the heat removed from the earth cannot be stored for later use. The heat must be used immediately or lost.

In addition, the brine or steam loses a significant amount of its heat (generally 25% to 30%) as it is brought to the surface. Brine or steam from geothermal reservoirs is generally accompanied by hydrogen sulfide and other undesirable gases, which must be captured before they escape into the atmosphere. Because the temperature of the brine or steam is relatively low, a large amount must be transported to the surface to generate a sufficient level of electricity. Consequently, large diameter wells, which are expensive to drill, are required. Moreover, the brine or steam that is brought to the surface is often highly mineralized and corrosive. If it is used directly in a turbine, the turbine must be modified to withstand these conditions, thereby further deceasing the efficiency of the system. In the alternative, the brine or steam may be used to boil another fluid through a heat exchanger in a binary generating system. This alternative also loses some efficiency through the heat exchanger.

Another problem that can be caused by the minerals in the brine or steam is scaling in the wells, which can build up over time and must be periodically removed. The brine presents problems of disposal after it has been used, unless it is reinjected into the reservoir, which requires expensive pumping and may contaminate the reservoir. Even if the brine is reinjected, some of the salts may drop out of the solution as the brine is cooled prior to reinjection. These salts, which may be radioactive or otherwise hazardous, must be safely removed and discarded.

The most significant limitation is that there are very few reservoirs that are both large enough and hot enough to make geothermal exploitation an economical prospect. The conventional method for geothermal production of electricity is thus very limited in application.

Research is currently being conducted into the possibility of drilling into hot, dry rock ("HDR") and injecting water to create a geothermal reservoir which can then be tapped to generate electricity. Such systems, however, face many of the same problems as conventional geothermal systems and are more expensive. Prior HOR systems require two wells to be bored, an injection well for injecting the water to create a reservoir and a separate production well for continuously bringing the steam to the surface. Employing only one well for injecting water and retrieving steam would not be efficient, since either too much energy would be lost when the injected water passes the rising steam, or the steam would be retrieved only intermittently so that energy would not be supplied to the generator on a continuous basis.

The injection of water into the rock requires an amount of energy that represents a significant fraction of the energy that the system can produce, thus lowering the efficiency of the system. Also, a certain percentage of the water that is injected is lost into fractures in the rock, and is not returned up the production well. The greater the amount of pressure that is used to drive the water from the injection well to the production well, the more water is lost. The higher pressure at the injection well causes the cracks to dilate, as does the colder water, which causes the rock to contract. The dilation is needed at the production well, where it accelerates the release of the energy in the rock. Tests have shown that short-term shutting-in of the production well improves overall production from the well by increasing dilation therein.

With geothermal production technology still at its infancy, the predominant method used for the generation of electricity is the combustion of hydrocarbons and the conversion of the resultant heat to electricity. Up until the last decade, most electricity was generated by the combustion of coal to produce steam. Recently, approximately half of all new electric generating capacity has taken the form of combustion turbines burning oil or natural gas and using the power to create electricity through a direct link to a generator. In a system using a "combined cycle," the heat from the combustion turbine exhaust is used to create steam, which then generates additional electricity in a steam turbine. However, a combustion turbine uses a significant amount of the energy it creates to compress the air that it takes in to sustain its operation. Each of the foregoing combustion processes releases substantial amounts of nitrogen oxides that create air pollution and the potential for acid rain. They also produce carbon dioxide, thus contributing to global warming. If coal or oil is used as the fuel, sulfur dioxide is also released into the atmosphere, which may produce additional acid rain, and particulates may be released as well. The combustion of coal also produces ash, which must be disposed of properly. Moreover, these processes all deplete limited natural resources.

Other technologies used to produce electricity include nuclear, hydroelectric, solar, and wind generation. Nuclear generation is expensive and presents serious issues of disposal and contamination. Hydroelectric, solar, and wind generation face temporal and spatial imitations in terms of the areas in which they are effective, thereby necessitating extensive collection systems and causing environmental impacts. Further, solar and wind generation are significantly more expensive than conventional technology.

Much of the electricity currently produced is generated by condensing steam turbines. Fuel is combusted and the exhaust is released into the atmosphere, while the heat produces superheated steam. The steam passes through a steam turbine generator for generating electricity and is condensed at the end of the cycle. The drop in pressure due to condensation at the outlet end of the turbine permits the turbine to turn more freely, but the overall process is still less than forty percent efficient, in part due to the need to convert the combustion heat into steam energy. A significant amount of energy is also lost through the exhaust of the combustion process.

A steadily increasing portion of new generating capacity installed in recent years is in the form of combustion turbines. Combustion turbines use the energy released from combustion to turn the shaft on a turbine, which then turns an electrical generator. The turbine requires a large volume of air for the combustion, which requires filtering and, often, heating or coofing. It also introduces dirt into the turbine and consumes energy. The exhaust that is released into the atmosphere carries a significant amount of energy as well as pollution with it. In addition, a combustion turbine uses a significant amount of energy to compress the inlet air, yet only 16% (or less) of which is oxygen used in the combustion process.

Only recently have combustion turbines achieved efficiencies approximating 40% while operating in "simple cycle." Efficiencies approximating 50% can be achieved by combustion turbines operating in "combined cycle," in which the heat of the exhaust from the combustion turbine is converted into steam energy, which is then used to operate a steam turbine generator. This steam is not, however, as superheated as the steam that is ordinarily used in steam turbine generators. Consequently, the steam cycle of a combined cycle system is less efficient than a simple steam turbine.

The steam turbine and the combustion turbine (whether simple cycle or combined cycle) both cause pollution from the release of products and byproducts of combustion into the atmosphere. They lose efficiency because they release as exhaust a significant amount of the energy from the combustion. The steam generator and the combined cycle combustion turbine generator lose efficiency due to the conversion of heat into steam pressure.

A process for supplying thermal energy for an endothermic reaction from a source remote from the reaction site is disclosed in US 4,192,371.

### Summary of the Invention

The present invention as defined in claims 1 and 16 is a system for the efficient generation of electricity from geothermal energy wherein one or more substances is transported down a well to a depth at which geothermal heat (whether from brine or steam reservoirs or hot, dry rock) is sufficient to cause a thermal reaction, such as an endothermic reaction or an electrolysis reaction to occur among such substances. The reaction products are then transported separately to the surface, where the products undergo a reverse (exothermic) reaction, and energy from this exothermic reaction is converted into electrical energy, whether through a steam turbine, a combustion turbine, or a combination of the two. In certain circumstances, a fuel cell might take the place of the turbine(s).

The thermal reaction such as the endothermic reaction at the bottom of the well may proceed slowly, at a relatively low temperature, with the products being created and collected over a large area. The exothermic reaction will proceed rapidly and reach a high temperature, thus effectively concentrating the geothermal heat to make the production of electricity more efficient. In the first preferred embodiment of the present invention, a catalytic device is used having one or more conduits, such as tubes or porous rods, for collecting one or more of the products of the endothermic reaction and transporting such product(s) separate from the other product(s). The conduits are nested inside a ceramic material permeable by the products, where the ceramic material is surrounded by a thin film or mesh of a catalyst such as a zeolite. Although the injected water automatically undergoes the endothermic reaction upon exposure to the heat at the bottom of the well, the use of a catalyst on the surface of the catalytic device is desirable to accelerate the reaction. The tubes or conduits have a cross-sectional configuration that is effective for collecting the intended products.

One conduit or set of conduits is made from a material that is permeable by one of the products of the endotnermic reaction, but not permeated by or repels (e.g., chemically, by higher pressure) the other product(s) of the endothermic reaction and the reactant(s). Another conduit or set of conduits receives the remaining product(s). The tubes will be assembled in a fashion to promote the separation of the products by absorbing them separately as they form on the surface of the catalyst. In a simple form, the catalytic device is a conduit composed of a catalyst that is permeable by only one of the products of endothermic reaction. The other products and remaining reactants, if any, would return from the bottom of the well by a separate conduit.

In the first preferred embodiment, the catalyst is porous to all products of the endothermic reaction. A selective material that is porous to only one product surrounds the tubes or porous conduits that are closest to the surface of the catalyst, so that such product is removed from the catalyst. The innermost tube or porous conduit collects the remaining product. For instance, if the decomposition of water is the desired endothermic reaction, the catalyst will be a suitable transition metal such as, for example, palladium. The catalyst material is a thin film or mesh surrounding the porous ceramic material in which the conduits for the products are embedded. In the first preferred embodiment, a series of outer conduits absorb hydrogen, and an inner conduit absorbs oxygen. The inner conduit may be simply a hole in the porous ceramic material through which the oxygen diffuses. The series of conduits for receiving exclusively hydrogen may, for example, be made from palladium or other materials which are sufficiently porous to allow hydrogen to pass through, but not oxygen.

As the respective tubes absorb the respective products, the endothermic reaction with the assistance of the catalyst will effectively decrease the total number of molecules outside the catalytic device. Since the porous catalytic device effectively removes the endothermic products out of the reservoir, the elevated pressure in the reservoir will not oppose the endothermic reaction. In fact, the elevated pressure at the bottom of the well promotes the endothermic reaction. The optimal design for a particular catalytic device will depend on the nature of the endothermic reaction, its reactant(s) and products, the type of the catalyst used, and the conditions under which the reaction occurs.

A catalytic device constructed in accordance with the present invention will promote the endothermic reaction and, simultaneously, collect and separate the products of that reaction. The system of the present invention advantageously includes a mechanism for collecting the products of the endothermic reaction to transport them to the top of the well. The present invention will collect the products and, at the same time, segregate them in order to preclude unwanted reactions between the products or of a product with some other material. The invention will also cause the elevated pressures in the well to promote the endothermic reaction. The elevated pressures do not oppose the reaction since the porous conduits receive the reaction products.

In another embodiment, instead of using a catalytic device to catalyze the endothermic reaction, any of several reactions could be used to cause the endothermic reaction. The preferred endothermic reaction is the decomposition of water into hydrogen and oxygen. The subsequent exothermic reaction will then produce pure water, which can be transported back down the well for another cycle. However, the temperature ordinarily necessary for the thermal decomposition of water is not present in the earth's crust at a depth that is currently attainable by practical means. Thus, the decomposition of water may be achieved through a sequence of reactions having sufficiently lower activation energies (such as 4H₂O + 2SO₂ + 2I₂ -> 2H₂SO₄ + 4HI and 2H₂SO₄ -> 2SO₂ + 2H₂O + O₂ and 4HI -> 2I₂ + 2H₂, which results in a net reaction of 2H₂O -> 2H₂ + O₂) to permit the decomposition of water to occur under the conditions obtained in the well. The products of the decomposition are then gathered and transported separately to the surface, where they may be stored (separately) until used in the exothermic reaction. The product of the exothermic reaction is then returned to the well in a closed cycle.

Another reaction that can be used, the "water gas" reaction, CH₄ + H₂O -> CO + 3H₂, occurs spontaneously at 800°C. However, most such reactions may require oxygen from the air to complete the exothermic reaction and (whether or not they so require air) they may produce, in the course of the subsequent exothermic reaction, carbon dioxide, nitrogen oxides, or some other undesirable product. In addition, efficiency may be lost due to the need to use heat exchangers or other means to handle certain reaction products.

Electricity generating systems constructed in accordance with the invention offer advantages over existing generating technologies. The primary advantage over existing geothermal systems is that the system of the present invention absorbs a greater amount of heat per unit volume through the endothermic reaction than can be captured by the heated brine or steam. For example, the decomposition of a given mass of water captures five to six times the amount of heat that is represented by the same mass of steam. Further, higher temperatures (and therefore greater efficiencies) can be obtained in the exothermic reaction and the generation of electricity.

In addition, because brine is not required by the invention, the use of geothermal energy to generate electricity in accordance with the present invention is not limited to those locations having economically viable subterranean reservoirs of heated brine. Further, no efficiency need be lost to heat exchangers in order to avoid mineral deposits in the generating mechanism. So long as the products of the endothermic reaction are kept separate, none of the energy gained at the bottom of the well is lost in bringing the energy to the surface. The products of the reactions will not be corrosive to the equipment. No toxic gases will be released to the atmosphere. The products of the endothermic reaction convey the energy in a much smaller volume, and therefore the borehole drilled for creating the well may have a much smaller diameter and is thus less expensive to bore. In addition, only one well is required instead of two since the injected water will not react with the endothermic reaction products that are drawn up through separate conduits within the well. Any injection of water will be made at the "production" welL As a result, much of the pumping energy now used to force the water from the injection well through the fractures to the production well will be saved, water loss into the rock will be lower, and well performance should be improved in the manner indicated by the shutting-in tests of existing geothermal production wells.

Moreover, mineral deposits will not build up and present problems in the well. The reinjection or disposal of the brine will not be required. To the extent that the endothermic reaction is (on a net basis) the decomposition of water, no pollution will be created, let alone released into the atmosphere, and there will be no waste of limited resources. The products of the endothermic reaction can be stored and used when electricity is needed. If the products of the endothermic reaction come out of the ground at high pressure, they can be stored and used at high pressure, avoiding the need to compress them prior to the exothermic reaction (a step that requires significant energy in combustion turbines) or, if the exothermic reaction does not require compression, the excess pressure from the well can be used to generate additional energy.

The preferred apparatus for exothermic reaction comprises the combination of a "combustion" turbine which is fueled by two or more reactants that combine in an exothermic reaction (the product(s) of which can be condensed) and a condenser. In a preferred embodiment, the reactants are hydrogen and oxygen which are produced by the endothermic reaction at the bottom of the well. The hydrogen acts as a fuel and, when mixed with the oxygen, combusts to create steam. Following the final power stage in which the exothermic reaction is harnessed by the "combustion" turbine, the product(s) of the exothermic reaction islare condensed, thus reducing the amount of back-pressure on the combustion turbine and increasing its efficiency. The preferred combination turbine would be fueled with hydrogen and oxygen, which would be combusted to produce steam and be condensed at the outlet end of the turbine. Such a combination turbine could be used as a part of the system of the present invention or could operate independently on other fuel sources. Alternatively, the system of the present invention could also employ either a standard combustion turbine or a boiler combined with a steam turbine or a fuel cell.

Combination turbines constructed in accordance with the invention offer several advantages. By condensing the product(s) of the exothermic reaction, the combination turbine will reduce the back pressure of the exhaust from the combustion turbine and increase the pressure drop across the final combustion stages of the turbine. Advantageously, the power turbine section of the combination turbine generally has more power stages than the power turbines of prior art combustion turbines, thus harnessing more of the energy from the exothermic reaction and increasing the efficiency of the turbine and simultaneously making it easier to condense the steam at the outlet of the turbine. In addition, the combination turbine will not require a heat exchanger to generate steam, thereby increasing its efficiency. To the extent that condensation creates a "closed loop" (i.e., all of the products are condensed or otherwise captured) it will be possible to make productive use of some of the energy that is otherwise lost with the exhaust and further increase efficiency. To the same extent, the combination turbine will avoid releasing pollution into the atmosphere. In addition, if the combination turbine is fueled entirely from captive sources, as in the preferred model using hydrogen and oxygen, the dirt and other impurities that are taken into most prior art combustion turbines (causing wear and tear and compelling regular cleanings) is avoided, and the energy that is used by prior art combustion turbines to condense, filter, and heat or cool inlet air is conserved. Furthermore, unlike solar or hydropower systems, the combination turbine of the present invention can, depending on the volume of storage for the reactants, operate on demand, as a peaking unit or as a baseload unit.

### Brief Description of the Drawings

The preferred embodiments of this invention, illustrating all their features, will now be discussed in detail. These embodiments depict the novel and nonobvious system for the geothermal production of energy of this invention shown in the accompanying drawings, which are included for illustrative purposes only. These drawings include the following figures, with like numerals indicating like parts:
Figure 1 is a cross-sectional schematic view of a preferred embodiment of the endothermic system of the present invention.
Figure 1a is an enlarged cross-sectional schematic view of the bottom of the well of the system of Figure 1.
Figure 2 is a cross-sectional schematic view of another preferred embodiment of the present invention illustrating an alternate means of releasing water into the hot, dry rock.
Figure 2a is an enlarged cross-sectional schematic view of the bottom of the well of the system as shown in Figure 2.
Figure 3 is a cross-sectional schematic view of another embodiment of the system of the present invention.
Figure 4 is an enlarged cross-sectional schematic view of the bottom of the well of another embodiment of the system of the present invention.
Figure 5 is an enlarged cross-sectional view of an example of a pipe used in coupling the chambers illustrated in Figure 4.
Figure 6 is an enlarged cross-sectional view taken along line 6-6 of Figure 1, showing the elements of the catalytic device of the system.
Figure 7 is an enlarged cross-sectional view taken along line 7-7 of Figure 3, showing an alternate embodiment of the catalytic device of the system.
Figure 8 is a schematic view of the combination turbine used in the system of the present invention.

### Detailed Description of the Drawings

This invention includes systems and methods of capturing and utilizing geothermal heat using a thermal process. The thermal process desirably produces products that are exothermic reactants. Electricity can then be generated by exothermic reaction of the products of the thermal process. Two preferred thermal processes are described herein.

### Geothermal Generating System with Catalytic Device

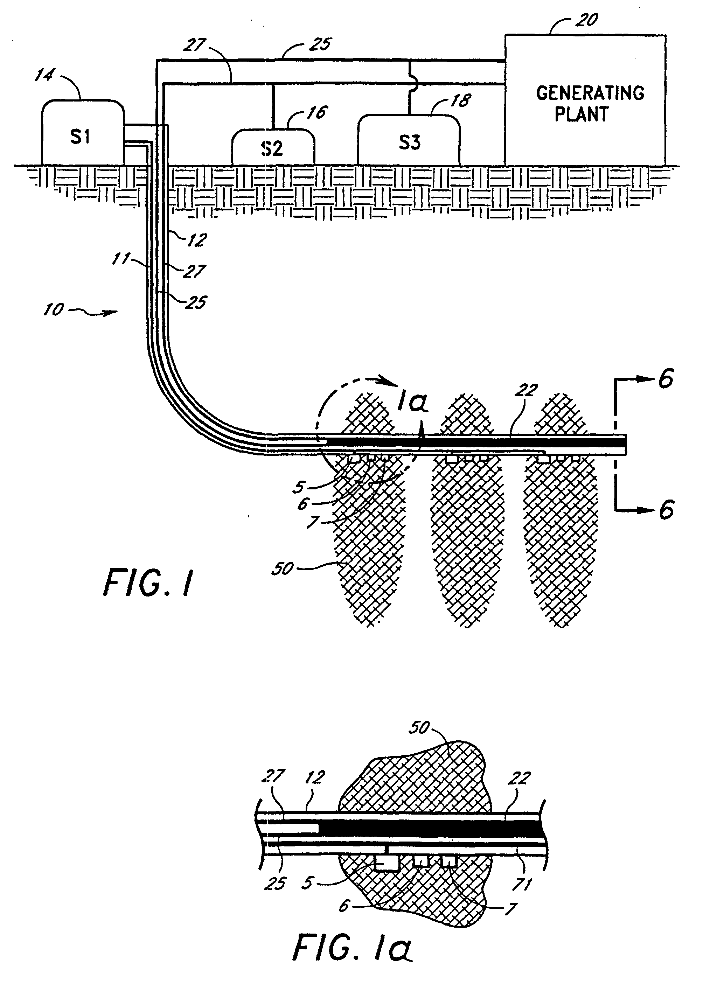

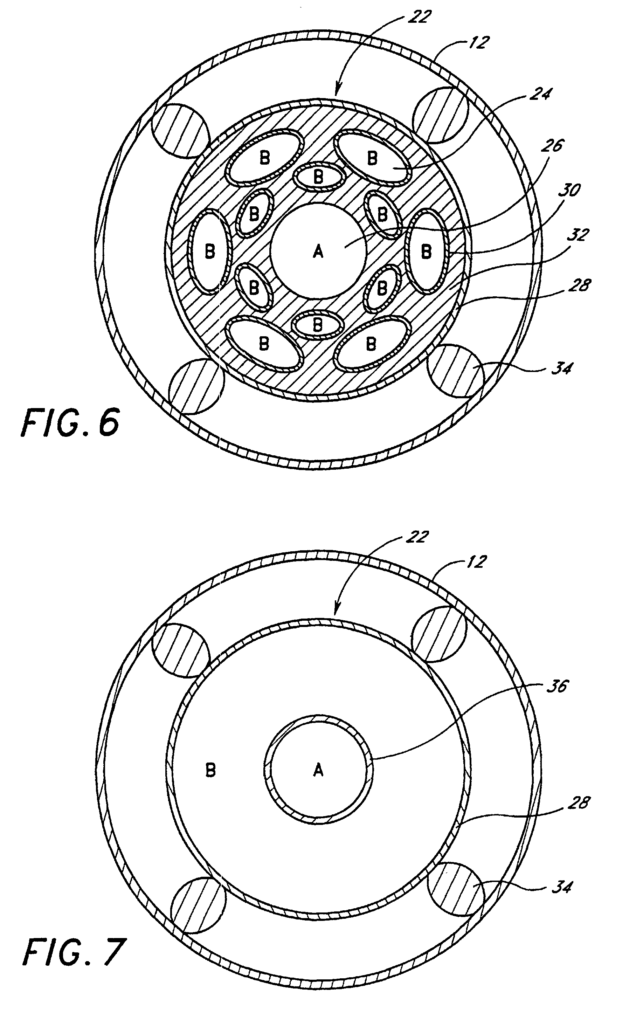

Figure 1 illustrates the geothermal generating system 10 of the present invention. With the present system 10, a viable hot, dry rock system can now be efficiently used for converting geothermal heat to electricity. The present system 10 avoids the problems of pollutants, is less expensive, and is greatly improved in operating efficiency. The system 10 comprises a well 12 coupled to a storage tank 14, shown as S1 in Figure 1, for storing the reactants that are to be used for the endothermic reaction that occurs at the bottom of the well 12 in fracture zones 50 of hot, dry rock. It is contemplated that the system 10 of the present invention may also be used at other locations deep within the earth, such as reservoirs, where the geothermal heat is hot enough to induce the desired endothermic reaction. A catalytic device 22, which catalyzes the desired endothermic reaction, resides within the bottom section of the well 12 with porous conduits or chambers 24 and 26 (shown in Figure 6) of the catalytic device 22 coupled to standard conduits 25 and 27, respectively, which extend up through the well 12. The standard conduits 25 and 27 transport the products of the endothermic reaction at the bottom of the well 12 to the earth's surface, where the products may be stored in storage tanks 18 (S3) and 16 (S2), respectively, or delivered immediately to a generating plant 20 for conversion to electricity. The endothermic reaction products are transported separately through the porous conduits 24 and 26, and then through the conduits 25 and 27 of the present invention to the combination turbine of the present invention. In one embodiment of the present invention, the energy is released from the products upon undergoing an exothermic reaction as will be explained in greater detail below. In turn, this energy is converted to electrical energy.

In the preferred embodiment, the endothermic reactant or compound stored in the storage tank 14 is water, which is decomposed to hydrogen and oxygen at the bottom of the well 12. The storage tank 14 maintains a column of water within the well 12. Due to the high pressure environment at the bottom of the well 12 created by the column of water in the well 12, the elevated pressure forces the endothermic products through the catalytic device 22, into the porous conduits or chambers 24 and 26, and up the conduits 25 and 27.

A separate conduit 11 coupled to the storage tank 14 is also sent down to the bottom of the well 12 where water from the water conduit 11 may be released from the well 12 to the fracture zone 50 through a one-way valve 5 in the well 12. To create the fracture zones 50, water is injected into the hot, dry rock to dilate cracks and access a larger volume of rock for a circulating medium. Since a percentage of water is lost into the fractures in the rock, water will be needed to resupply the fracture zone from time to time through the one-way valve 5. In the preferred embodiment, the water injected into the fracture zone 50 comes from the separate water conduit 11 rather than the column of water within the well 12, since the water to be injected into the fracture zones 50 is more easily controlled by using the conduit 11 than using the water within the well 12. A pressure gauge 6 and a temperature gauge 7 on the exterior of the well 12, as shown in Figures 1 and 1a, measure the pressure and temperature in the fracture zone 50 so as to notify an operator when it is necessary to inject more water into the fracture zone 50.

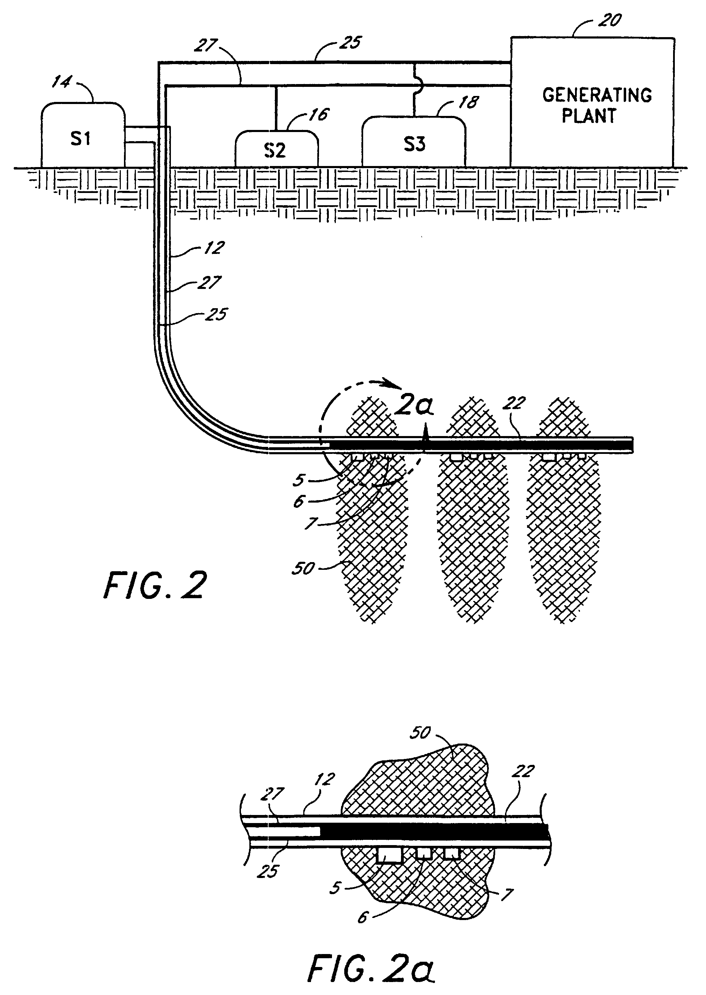

Figures 2 and 2a illustrate another embodiment which uses water directly from the water circulating within the well 12 instead of a separate conduit 11. In this embodiment, a valve 5, a pressure gauge 6, and a temperature gauge 7 are also used in a similar manner as described above with respect to Figures 1 and 1a. The embodiment of Figures 1 and 1a which injects water is used, however, in situations where the pressure in the fracture zone 50 is greater than the pressure inside the well 12. In such a case, the conduit 11 is coupled with a pump (not shown) at the surface to drive the water.

Referring to Figure 1, the endothermic reaction takes place in the horizontal section of the well 12 which is surrounded by the fracture zones 50. Instead of having a horizontal section, the well 12 may be angled downwardly (not shown). The heat generated from the fracture zones 50 raises the temperature of the casing of the well 12, which correspondingly raises the temperature of the water within the well 12. In this environment, the catalytic device 22 is able to induce the endothermic reaction and separate the endothermic products.

Instead of being one continuous section as shown in Figure 1, catalytic device 22 may be divided into a plurality of serially connected sections which are coupled together with a comparatively flexible tubing (not shown). Such a scheme is advantageous since the flexible tubing, such as a standard pipe, would be less costly than a continuous section of catalytic device 22 which is made substantially of ceramic. The flexibility is also advantageous due to the need for directional drilling to access the fracture zones 50. Headers (not shown) could be used to connect the flexible tubing to each catalytic device section where the tubing would be located in areas where the fracture zones 50 did not exist. The flexible tubing, such as pipe, should be impermeable to the endothermic products and able to withstand temperatures up to 800°C.

Referring to Figure 6, a cross section of the bottom of the well 12 is illustrated to show a preferred embodiment of the catalytic device 22 in greater detail. The catalytic device 22 is supported within the well 12 by a plurality of rods 34 to allow the endothermic reactants to circulate around the catalytic device 22. The rods 34 may also be knobs or any other support device as is readily understood by those of skill in the art. As shown in Figure 6, the catalytic device 22 comprises porous ceramic material 32, with the porous conduit 26 disposed substantially within the center of the ceramic material 32. The ceramic material 32 is selected to have a structure which would be relatively permeable to the endothermic products, but at the same time, would not encourage the reformation of the reactants within the ceramic material 32.

Substantially surrounding the porous conduit 26 and within the ceramic material 32 are a series of the porous conduits 24. The porous conduits 24 and 26 may be either tubes or conduits and may be circular in cross section, or may employ a different design that is more effective in collecting the products. The porous conduit 26 may be defined by a hole in substantially the center of the ceramic material 32. The porous conduit 24 is made from a material that is porous as to only one of the endothermic products. In the preferred embodiment where water is decomposed, the porous conduit 24 is made from a suitable transition metal, such as palladium, which is porous to hydrogen, but not oxygen. The porous conduit 26 is labelled in Figure 6 by the letter A to represent that the porous conduit 26 receives endothermic product A, and the porous conduits 24 are labelled by the letter B to represent that the porous conduits 24 receive endothermic product B. In the preferred method, product A may refer to oxygen, for example, and product B may refer to hydrogen.

A thin film or mesh catalyst 28 on the catalytic device 22 is provided at the bottom of the well 12 to accelerate the series of reactions to produce the hydrogen and oxygen products. Thus, the water at the bottom of the well 12 reacts with the catalyst 28 on the surface of the catalytic device 22. Ceramic material is designed to be permeable to the endothermic reaction products so that the products will diffuse to their respective porous conduits 24 and 26. The porous conduit 24 and 26 are assembled within the ceramic material 32 to promote the separation of the products by absorbing them as they form on the catalyst 28.

As shown in Figure 6, each porous conduit 24 is made from a selective material 30 which has the property of being porous only with respect to product B. Thus, product B of the endothermic reaction permeates the ceramic material 32 and is collected by the series of the porous conduits 24 after product B diffuses through the selective material 30. Since the selective material 30 is specifically designed to block the entry of product A, as product A diffuses through the ceramic material 32, product A maneuvers around the locations of the selective material 30 and through the passages between the series of the porous conduits 24 until product A diffuses into the porous conduit 26. As a result, the products A and B of the endothermic reaction are kept separate in their respective conduits, 26 and 24. Some of product B may, in fact, diffuse past the porous conduits 24 and eventually into the porous conduit 26 where this amount of product B reacts with product A. This reaction does not have any significant deleterious effect on the system. In the case of the decomposition of water for example, the porous conduit 26 is filled with oxygen and a small amount of water vapor that can be dehydrated from the oxygen at the surface.

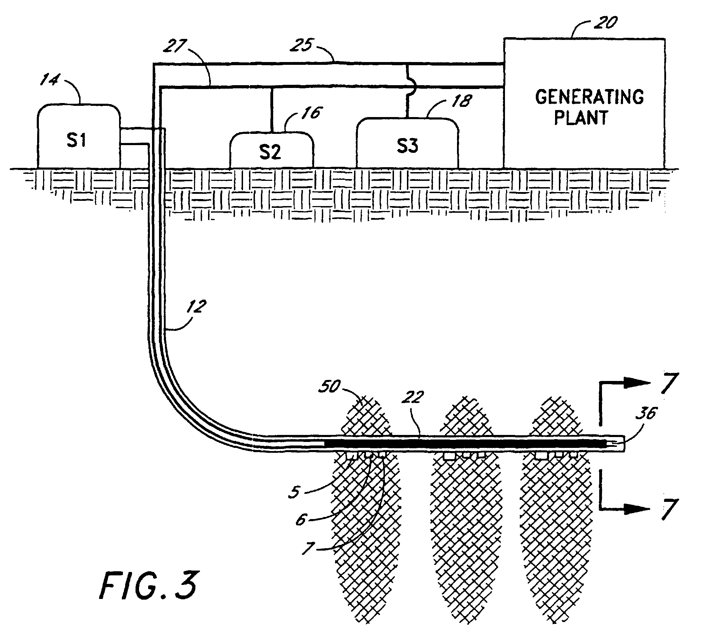

Another embodiment of the system 10 of the present invention is illustrated in Figure 3, where a different catalytic device 22 is employed. Notwithstanding the embodiment illustrated in Figure 3, the horizontal section of the well 12 may be angled downwardly (not shown). In Figure 3 the catalytic device 22 is shown to have an open-ended tube 36 extending out from the und of the catalytic device 22. The open-ended tube 36 extends through the catalytic device 22 and is coupled to a standard conduit 27, desirably through a header (not shown). This embodiment of the catalytic device 22 is shown in detail in the schematic cross section of Figure 7. As in the embodiment of Figure 6, the catalytic device 22 is supported in the middle of the well 12 by a plurality of support rods or knobs 34. The catalytic device 22 comprises a hollow conduit made of a catalyst 28, and substantially within the center of the catalyst 28 is extended a tube 36.

In the preferred case of decomposing water, the catalyst 28 is made from palladium which absorbs hydrogen into the hollow conduit. The oxygen is unable to diffuse through the palladium tube and continues to drift to the end of the well where the oxygen eventually enters the open end of the extended tube 36 as will water, ozone, and hydrogen peroxide. The oxygen, ozone, and hydrogen peroxide will more easily gravitate to the end of the well 12 when the horizontal section of the well 12 illustrated in Figure 3 is angled downwardly. The oxygen, water, ozone, and hydrogen peroxide is pumped back up to the surface through the extended tube 36 and then the standard conduit 27. The oxygen and ozone will, and the hydrogen peroxide may, be separated out of the mixture before going to the turbine to undergo the exothermic reaction. Such separation may be accomplished by conventional means readily known to those of skill in the art. The hydrogen which diffuses through the palladium catalyst 28, rises to the surface through the hollow portion of the catalyst 28 and then the standard conduit 25 due to the high pressure at the bottom of the well 12.

Referring to Figure 3, the catalytic device 22 provides two important functions: it harvests and separates the endothermic products, and it removes the products from the reservoir so that the elevated pressure in the reservoir does not oppose the endothermic reaction. A number of substances may catalyze the endothermic reaction. However, the products of the reaction are likely to readily recombine into the reactant(s), under the conditions existing in the well. In addition, the products of the endothermic reaction may be sufficiently reactive, especially at elevated temperatures, to react with the walls of the well or otherwise react in an undesirable manner once they escape from the surface of the catalyst. The products must therefore be collected and separated. Moreover, to the extent that the endothermic reaction provides more moles of product than it consumes moles of reactant, the reaction will be opposed by the high pressure environment that exists in the well 12. Ouring operation the well 12, a column of water will create a very high pressure at the bottom of the column of water. Since every 10 meters adds 1 atmosphere of pressure, a well drilled to a depth of 3 kilometers would create a pressure of 300 atmospheres at the bottom of the well 12. This opposition by the pressure will be a major impediment to the reaction at the bottom of the well, which will be at a considerable depth and at an elevated temperature, causing the pressure to be increased significantly. Because the conduits or chambers 24 and 26 are permeable to the endothermic products, however, the very high pressure will force the products through the respective conduits 24 and 26, and thereby effectively decrease the number of molecules outside the catalytic device 22. Thus, the elevated pressure at the bottom of the well 12 promotes the endothermic reaction.

Additionally, the elevated pressure at the bottom of the well 12 forces the endothermic products up to the earth's surface through the porous conduits 24 and 26, and then the conduits 25 and 27. Thus, no pumps are required to transport the products up to the generating plant 20, although devices such as pumps could be used.

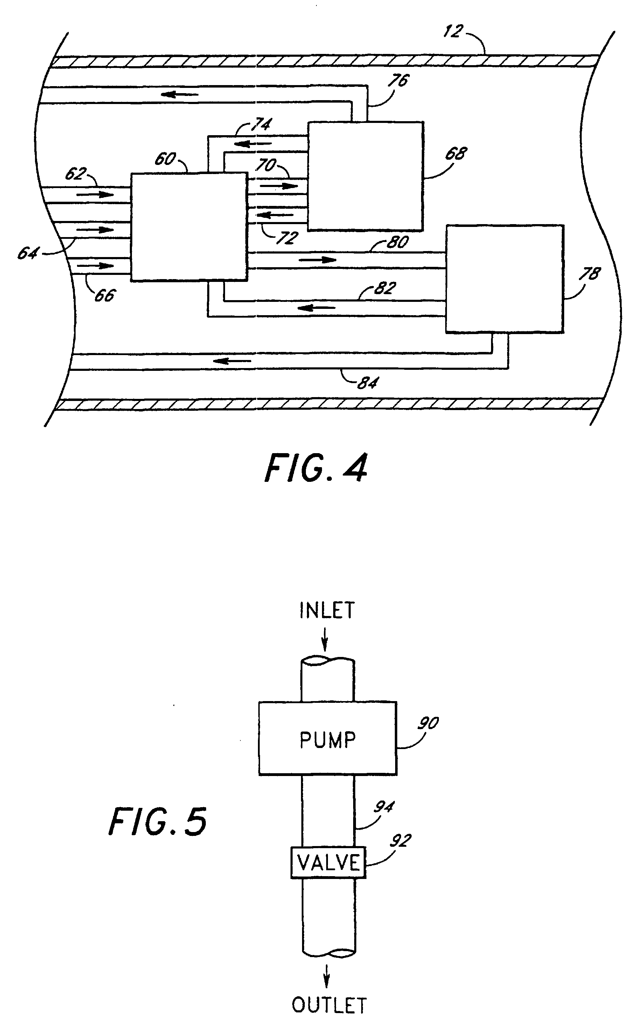

Another means for inducing the endothermic reaction at the bottom of the well 12 is illustrated in Figure 4. Because the temperature ordinarily necessary for the thermal decomposition of water is not present in the earth's crust at a depth that is currently attainable by practical means, the system 10 illustrated in Figure 4 does not directly decompose water to hydrogen and oxygen. Instead, the system 10 of Figure 4 accomplishes the decomposition of water through a sequence of endothermic reactions having sufficiently low activation energies to produce the desired products. Depending upon the conditions (primarily temperature and pressure) existing at the point of the endothermic reaction, any of several reactions could be used.

One such series of reactions utilizes as a first reaction 2H₂O + SO₂ + I₂ - > H₂SO₄ + 2HI and the products of this first reaction are then decomposed in separate reaction chambers as follows: 2H₂SO₄ -> 2SO₂ + 2H₂O + O₂ in one and 2HI -> I₂ + H₂ in the other. Thus, the overall endothermic reaction requires not only water, but sulfur dioxide and iodine as well. Therefore, in this embodiment, water, sulfur dioxide, and iodine are transported to the bottom of the well 12 into a first reaction chamber 60 through individual pipes 62, 64, and 66, respectively.

The first reaction chamber 60 produces the hydrogen sulfate which is transported through a pipe 70 to a second reaction chamber 68 where the hydrogen sulfate is broken down into water, sulfur dioxide, and oxygen. The water and sulfur dioxide is recycled back to the first reaction chamber 60 through pipes 74 and 72, respectively. The resulting oxygen from the second reaction chamber 68 is transported back up to the surface by a pipe 76. The first reaction chamber 60 also produces hydrogen iodine which is transported through a pipe 80 to a third reaction chamber 78 where the hydrogen iodine is broken down into iodine and hydrogen. The iodine is recycled back to the first reaction chamber 60 through a pipe 82, and the hydrogen is transported back to the surface through a pipe 84. The rate of the series of reactions may be controlled by having valves (not shown) in the pipes delivering the various compounds to the respective reaction chambers where the valves are controlled from the surface. Although oxygen and hydrogen are the only end products that are transported to the surface, the remaining end products, water, sulfur dioxide, and iodine are continually consumed by the series of reactions and reentered into the first reaction chamber 60 to produce more hydrogen and oxygen. Although sulfuric acid is produced in the first reaction, the acid is immediately decomposed in the subsequent reaction. Moreover, because the reactions that occur in the second reaction chamber 68 and the third reaction chamber 78 require a very high temperature, the second and third reaction chambers 68, 78 should be located in sections of the well 12 that are within the fracture zones 50.

To further illustrate the mechanism of how a compound may be transported from one reaction chamber to another, Figure 5 is provided. Figure 5 shows a pump 90 and a valve 92 coupled to transport pipe 94 where the pump 90 and valve 92 are employed to control the deliverance of the gas within, for example, a transport pipe 94 to its respective reaction chamber. Although a pump has been shown, it is shown by way of example only, and depending on the various pressures involved, pumps (not shown) may be needed to facilitate the transport of gases. Pumps are not needed for the transport of gases oxygen and hydrogen through the pipes 76 and 84 since the elevated pressure at the bottom of the well 12 should cause the oxygen and hydrogen to rise to the surface.

Another reaction that can be used, the "water gas" reaction, CH₄ + H₂O -> CO + 3H₂, occurs spontaneously at 800°C. However, most such reactions may require oxygen from the air to complete the exothermic reaction and (whether or not they so require air) they may produce, in the course of the subsequent exothermic reaction, carbon dioxide, nitrogen oxides, or some other undesirable product. In addition, efficiency may be lost due to the need to use heat exchangers or other means to handle certain reaction products.

The primary advantage of relying on endothermic reactions in the system 10 of the present invention over existing prior art geothermal systems is that the system 10 absorbs a greater amount of heat per unit volume through the endothermic reaction than can be captured by the heated brine or steam. For example, the decomposition of a given mass of water captures five to six times the amount of heat that is represented by the same mass of steam. Due to the greater concentration of heat in the present invention, higher temperatures are achieved which improves the efficiency of the exothermic reaction in the turbine and the subsequent generation of electricity.

Additionally, the present invention requires only one well in contrast to the two wells required in prior art schemes. The endothermic reactants may be transported in the same well as the endothermic products since there is no danger that the reactants and products will interact. This is in contrast to previous systems where the injected water could not be transported in the same well as the rising steam for the steam would lose heat to the water, thereby reducing the efficiency of the prior art system. Moreover, the one well used in the present invention is less expensive to drill since the products of the endothermic reaction convey the energy in a comparatively much smaller volume than the steam or brine relied on by past geothermal systems. For example, in previous well systems to capture steam or brine from a reservoir, the cross-sectional area of the production well alone may be 36 inches. Because the present system 10 requires approximately one-sixth the space, the cross-sectional area of the well of the present system 10 may require, for instance, only 12 inches, 6 inches for injecting the water, and another 6 inches from transporting the hydrogen and oxygen.

### Combination Turbine

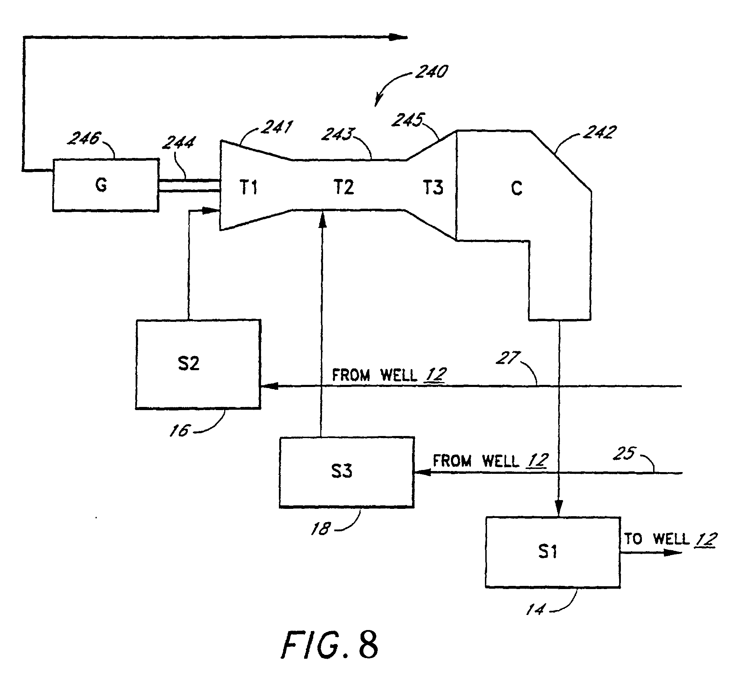

Referring to Figure 8, a schematic of a combination turbine 240 which produces the exothermic reaction to release the geothermal heat is illustrated. The combination turbine 240 comprises a turbine compressor stage 241, a turbine fuel injector and combustor stage 243, a turbine power stage 245, and a condenser 242. The turbine stages 241, 243, and 245 and the condenser 242 are advantageously constructed in a manner known to those of ordinary skill in the art. The combination turbine 240 is coupled to a generator 246 by a generator shaft 244 where the mechanical energy of the rotating generator shaft 244 is converted into electricity in the generator 246.

The turbine compressor stage 241 receives exothermic reactant A, which is product A from the endothermic (or electrolytic) reaction, from the storage tank 16 or directly from the well 12 through the conduit 27 (Figure 1). Depending on the type of exothermic reactant A (endothermic or electrolytic product A), the reactant A may not need to be compressed, and thus the compressor stage 241 may not be required. In the preferred embodiment, exothermic reactant A is oxygen. Since the oxygen coming from the well 12 is already compressed due to the pressure in the well 12, the oxygen should be sufficiently compressed to obviate the need for the compressor stage 241. The turbine fuel injector and combustor stage 243 receives exothermic reactant B, which is product B from the endothermic (or electrolytic) reaction, from the storage tank 18, or directly from the well 12 through the conduit 25 (Figure 1). In the preferred embodiment, exothermic reactant B is hydrogen.

In the stage 243, exothermic reactant B, i.e., hydrogen, acts as a fuel and combusts when mixed with exothermic reactant A, i.e., oxygen, to create a great amount of heat and produce steam. The resulting energy released by the exothermic reaction is harnessed to turn the blades within the power stage 245 which in turn rotates the generator shaft 244. After the exothermic product (steam) has passed through the turbine power stage 245, the exothermic product is immediately condensed in the condenser 242 where the exothermic vapor product is changed to liquid. The efficiency of the turbine 240 is improved by condensing the exothermic product to remove the back pressure from the turbine 240. The condensing of the exothermic product may be accomplished by means known to those of ordinary skill in the art. In the preferred embodiment the steam is condensed to water which is inserted into the endothermic (electrolytic) reactant storage tank 14 for reintroduction of the water into the well 12.

By combining the combustion turbine 240 with the condenser 242, the combination turbine of the present invention achieves a higher efficiency than previous combustion turbines where a steam turbine is also used in conjunction with a combustion turbine and a condenser. In the preferred embodiment of the present invention, efficiency is increased since the combination turbine does not require a heat exchanger to convert the heat of the exothermic product to steam. In past systems, the arrangement of the combination turbine of the present invention could not be employed because the exothermic product is a largely noncondensible pollutant as opposed to the condensible steam produced in the combination turbine 240 of the present invention.

Furthermore, to the extent that condensation creates a closed loop system where all of the exothermic product is condensed or otherwise captured, it is possible to make productive use of some of the energy that is lost in prior art systems with the exhaust, thus further increasing efficiency. To the same extent, the combination turbine 240 of the present invention avoids releasing pollution into the atmosphere, in contrast to prior art systems. Further, because the combination turbine 240 in the preferred embodiment is fueled by hydrogen and oxygen which are captive sources, dirt and other impurities that are taken into most combustion turbines from the air is avoided. Since the present invention relies on the endothermic (or electrolytic) products for conveying the geothermal heat, the products can be stored for use at a later time in contrast to previous systems where the captured steam or brine had to be utilized immediately. Accordingly, the combination turbine 40 of the present invention has the added flexibility of operating as a peakload unit to be turned on and off on demand, or as a baseload unit which functions at a constant rate.

Alternatively, the system 10 of the present invention may be used with a conventional combustion turbine, or a boiler with a steam turbine, or the products of the endothermic (or electrolytic) reaction might be used in a fuel cell.

It will further be apparent that the products of the endothermic (or electrolytic) reaction such as, for example, hydrogen and oxygen, are of value and the invention can be used to harvest these products and store them at the surface of the well 12 for uses other than producing electricity.

Further, the invention has utility in environments other than the geothermal well 12 and is useful in any environment, natural or man-made, having suitable temperature and pressure.

## Claims

1. A system for capturing geothermal heat and releasing the heat through exothermic reactions to convert to electricity comprising
a well (12) having a top and a bottom, said well being drilled to a sufficient depth to acquire energy from geothermal heat when input reactants are inserted into said well to cause reactions of said reactants;
a device (22) residing within the bottom of said well, said device capturing geothermal heat for harvesting and separating output products;
first (27) and second (25) conduits for transporting said output products to the top of said well;
third (24) and fourth (26) conduits residing within said device (22) for receiving said output products, wherein at least one of said third and fourth conduits (24, 26) is permeable for only one of said output products; and
means (20) coupled to said first and second conduits (27, 25) for using the output products to create exothermic reactions to generate power.

2. The system of claim 1, **characterized in that** said well (12) is coupled to a first storage tank (14) for storing said input reactants.

3. The system of claim 1 or 2, **characterized in that** said system further comprises a second storage device (16) coupled to said first conduit (27) for storing a first output product.

4. The system of any of claims 1 through 3, **characterized in that** said system further comprises a third storage device (18) coupled to said second conduit (25) for storing a second output product.

5. The system of any of claims 1 through 4, **characterized in that** said means (20) coupled to said first and second conduits (27, 25) comprises a combustion turbine (240) coupled to a condenser (242).

6. The system of claim 5, **characterized in that** said turbine (240) further comprises a compressor (241) coupled to the inlet of said turbine.

7. The system of claim 5 or 6, **characterized in that** the output of said condenser (242) is coupled to a first storage tank (14) for storing said reactants.

8. The system of any of claims 1 through 7, **characterized in that** the well is drilled down to the fracture zones (50) of hot, dry rock.

9. The system of any of claims 1 through 8, **characterized in that** the output products are endothermic products obtained by endothermic reactions.

10. The system of claim 9, **characterized in that** the endothermic reaction is the decomposition of water.

11. The system of any of claims 1 through 10, **characterized in that** the device (22) is a catalytic device.

12. The system of claim 11, **characterized in that** said catalytic device (22) comprises a catalyst (28) porous to both first and second products of the endothermic reactions, said fourth conduit (26) within said catalyst for receiving said first product, said third conduit (24) within said catalyst for receiving said second product, and a selective material (30) surrounding said third conduit (24) where said selective material (30) is porous only to said second product.

13. The system of claim 12, **characterized in that** said fourth conduit (26) is coupled to the first conduit (27) for transporting said first product to the top of said well (12), and said third conduit (24) is coupled to the second conduit (25) for transporting said second product to the top of said well (12).

14. The system of claim 11, **characterized in that** said catalytic device (22) comprises a catalyst (28) porous only to a first product of the endothermic reactions, said fourth conduit (26) within said catalyst for receiving said first product, at least one third conduit (24) attached to said catalyst (28) for receiving a second product of the endothermic reactions, and a selective material (30) surrounding said third conduit (24) where said selective material (30) is porous only to said second product.

15. The system of claim 11, **characterized in that** said third conduit (24) comprises a catalyst (28) porous only to a first product of said endothermic reaction, and said fourth conduit (26) is a return conduit (36) extending beyond the end of said catalytic device (22) to retrieve the remaining products of said endothermic reaction, said return conduit (36) impermeable to said first product.

16. A system for capturing geothermal heat using endothermic reactions and releasing the heat through exothermic reactions to convert to electricity **characterized by**:
a well (12) having a top and a bottom, where said well (12) is drilled to a sufficient depth to acquire geothermal heat through the endothermic reactions when reactants are inserted into said well;
a first chamber (60) located at the bottom of said well for receiving a plurality of reactants, where said reactants produce a first product and a second product;
a second chamber (68) located at the bottom of said well for receiving said first product of said first chamber, where said first product decomposes to produce a third, fourth and fifth product, said third and fourth product is transported to said first chamber, and said fifth product is transported to the top of said well (12); and
a third chamber (78) located at the bottom of said well for receiving said second product of said first chamber (60), where said second product decomposes to produce a sixth product and seventh product, said sixth product being transported to said first chamber and said seventh product being transported to the top of said well.

17. The system of claim 16, **characterized in that** said system further comprises a turbine (20; 240) for receiving said fifth and seventh products to create exothermic reactions to generate power.

18. The system of claim 17, **characterized in that** said fifth and seventh products are oxygen and hydrogen.

19. The system of claim 17 or 18, **characterized in that** said turbine (240) comprises a combustion turbine (243) coupled to a condenser (242).

20. The system of claim 11, **characterized in that** the catalytic device (22) for harvesting products of an endothermic reaction comprises
a catalyst (32) for including an endothermic reaction, where said catalyst (32) is porous to at least one of the products of the endothermic reaction;
said third and fourth conduit (26, 24) in contact with said catalyst (32) for harvesting and separating first and second output products of the endothermic reaction; and
a selective material (30) surrounding said third conduit (24) where said selective material is porous only to the second product.

21. The system of claim 20, **characterized in that** said third and fourth conduits (26, 24) reside within said catalyst (32).

22. The system of claim 20, **characterized in that** said fourth conduit (26) resides within said catalyst (32), and said third conduit (24) resides at the perimeter of said catalyst (32).

23. The system of claim 22, **characterized in that** said third and fourth conduits (24, 26) are semi-circular in cross-section with planar wall portions (146) that are coupled together.

24. The system of claim 23, **characterized in that** said third and fourth conduits (24, 26) are porous to receive respectively a first product and a second product of electrolysis, said third conduit (24) being porous only to the first product.

25. The system of claim 1, **characterized by** a combination turbine (240) wherein the geothermal heat produces first and second products at the bottom of a well (12) at a depth at which said geothermal heat is sufficient to cause an endothermic reaction, comprising
a combustion turbine (243) for separately receiving said first and second products from the bottom of said well (12) and being driven by the energy released by an exothermic reaction between said first and second products; and
a condenser (242) coupled to said combustion turbine (243) for condensing the product of said exothermic reaction to reduce the back pressure at the output of said combustion turbine.

26. The system of claim 25, **characterized in that** said combination turbine (240) further comprises a compressor (241) coupled to the inlet of said combustion turbine (243).

27. The system of claim 25 or 26, **characterized in that** the products received by said turbine converting the hydrogen and oxygen to steam.

28. The system of claim 25, **characterized in that** said condenser (242) converts said steam to liquid water and returns the liquid water to the system.

## Patentansprüche

1. System zum Gewinnen von Erdwärme und zum Freisetzen von Wärme durch exotherme Reaktionen, um diese in Elektrizität umzuwandeln, mit
einem Bohrloch (12), das eine Spitze und einen Boden aufweist, wobei das Bohrloch auf eine ausreichende Tiefe gebohrt wird, um Energie aus Erdwärme zu gewinnen, wenn Eingangs-Reaktionspartner in das Bohrloch eingebracht werden, um Reaktionen dieser Reaktionspartner zu verursachen;
einer Vorrichtung (22), die innerhalb des Bodens des Bohrlochs angeordnet ist, wobei die Vorrichtung Erdwärme gewinnt, um Ausgangsprodukte zu sammeln und zu trennen;
einer ersten (27) und einer zweiten (25) Leitung zum Transport der Ausgangsprodukte zu der Spitze des Bohrlochs;
einer dritten (24) und einer vierten (26) Leitung, die innerhalb der Vorrichtung (22) zur Aufnahme der Ausgangsprodukte angeordnet sind, wobei zumindest eine der dritten und der vierten Leitung (24, 26) für nur eines der Ausgangsprodukte durchlässig ist;
einem Mittel (20), das mit der ersten und der zweiten Leitung (27, 25) verbunden ist, um die Ausgangsprodukte zu verwenden, um exotherme Reaktionen auszuführen und Energie zu erzeugen.

2. System nach Anspruch 1, **dadurch gekennzeichnet, daß** das Bohrloch (12) mit einem ersten Speichertank (14) zum Speichern der Eingangs-Reaktionspartner verbunden ist.

3. System nach Anspruch 1 oder 2, **dadurch gekennzeichnet, daß** das System ferner eine zweite Speichervorrichtung (16) aufweist, die mit der ersten Leitung (27) zum Speichern eines ersten Ausgangsprodukts verbunden ist.

4. System nach einem der Ansprüche 1 bis 3, **dadurch gekennzeichnet, daß** das System ferner eine dritte Speichervorrichtung (18) aufweist, die mit der zweiten Leitung (25) zum Speichern eines zweiten Ausgangsprodukts verbunden ist.

5. System nach einem der Ansprüche 1 bis 4, **dadurch gekennzeichnet, daß** das Mittel (20), das mit der ersten und der zweiten Leitung (27, 25) verbunden ist, eine Verbrennungsturbine (240) aufweist, die mit einem Kondensator (242) verbunden ist.

6. System nach Anspruch 5, **dadurch gekennzeichnet, daß** die Turbine (240) ferner einen Kompressor (241) aufweist, der mit dem Einlaß der Turbine verbunden ist.

7. System nach Anspruch 5 oder 6, **dadurch gekennzeichnet, daß** der Ausgang des Kondensators (242) mit einem ersten Speichertank (14) zum Speichern der Reaktionspartner verbunden ist.

8. System nach einem der Ansprüche 1 bis 7, **dadurch gekennzeichnet, daß** das Bohrloch bis zu dem Bruchflächengürtel (50) von heißem trockenem Fels gebohrt ist.

9. System nach einem der Ansprüche 1 bis 8, **dadurch gekennzeichnet, daß** die Ausgangsprodukte endotherme Produkte sind, die durch endotherme Reaktionen erhalten werden.

10. System nach Anspruch 9, **dadurch gekennzeichnet, daß** die endotherme Reaktion die Zerlegung von Wasser ist.

11. System nach einem der Ansprüche 1 bis 10, **dadurch gekennzeichnet, daß** die Vorrichtung (22) eine Katalysatorvorrichtung ist.

12. System nach Anspruch 11, **dadurch gekennzeichnet, daß** die Katalysatorvorrichtung (22) einen Katalysator (28) aufweist, der sowohl für das erste als auch für das zweite Produkt der endothermen Reaktionen porös ist, eine vierte Leitung (26) innerhalb des Katalysators zur Aufnahme des ersten Produkts, die dritte Leitung (24) innerhalb des Katalysators zur Aufnahme des zweiten Produkts und ein selektives Material (30) aufweist, das die dritte Leitung (24) umgibt, wobei das selektive Material (30) nur für das zweite Produkt porös ist.

13. System nach Anspruch 12, **dadurch gekennzeichnet**, das die vierte Leitung (26) mit der ersten Leitung (27) zum Transport des ersten Produkts zu der Spitze des Bohrlochs (12) verbunden ist, und die dritte Leitung (24) mit der zweiten Leitung (25) zum Transport des zweiten Produkts zur Spitze des Bohrlochs (12) verbunden ist.

14. System nach Anspruch 11, **dadurch gekennzeichnet, daß** die Katalysatorvorrichtung (22) einen Katalysator (28) aufweist, der nur für ein erstes Produkt der endothermen Reaktiorien porös ist, die vierte Leitung (26) innerhalb des Katalysators zur Aufnahme des ersten Produkts, zumindest eine dritte Leitung (24), die an dem Katalysator (28) zur Aufnahme eines zweiten Produkts der endothermen Reaktionen angebracht ist, und ein selektives Material (30) aufweist, das die dritte Leitung (24) umgibt, wobei das selektive Material (30) nur für das zweite Produkt porös ist.

15. System nach Anspruch 11, **dadurch gekennzeichnet, daß** die dritte Leitung (24) einen Katalysator (28) aufweist, der nur für ein erstes Produkt der endothermen Reaktion porös ist, und die vierte Leitung (26) eine Rückleitung (36) ist, die sich über das Ende der Katalysatorvorrichtung (22) hinaus erstreckt, um die restlichen Produkte der endothermen Reaktion zu erhalten, wobei die Rückleitung (36) für das erste Produkt undurchlässig ist.

16. System zum Gewinne von Erdwärme, in dem endotherme Reaktionen verwendet werden, und zum Freisetzen von Wärme durch exotherme Reaktionen, um diese in Elektrizität umzuwandeln, **gekennzeichnet durch**:
ein Bohrloch (12) mit einem oberen Ende und einem unteren Ende (Boden), wobei das Bohrloch (12) auf eine ausreichende Tiefe gebohrt ist, um Erdwärme **durch** endotherme Reaktionen zu gewinnen, wenn Reaktionspartner in das Bohrloch eingeführt werden;
eine erste Kammer (60), die am Boden des Bohrlochs zur Aufnahme einer Vielzahl von Reaktionspartnern angeordnet ist, wobei die Reaktionspartner ein erstes Produkt und ein zweites Produkt erzeugen;
eine zweite Kammer (68), die am Boden des Bohrlochs zur Aufnahme des ersten Produkts der ersten Kammer angeordnet ist, wo sich das erste Produkt zersetzt, um ein drittes, viertes und fünftes Produkt zu erzeugen, wobei das dritte und das vierte Produkt zu der ersten Kammer und das fünfte Produkt zu dem oberen Ende des Bohrlochs (12) transportiert werden; und
eine dritte Kammer (78), die am Boden des Bohrlochs zur Aufnahme des zweiten Produkts der ersten Kammer (60) angeordnet ist, wobei das zweite Produkt sich zerlegt, um ein sechstes Produkt und ein siebtes Produkt zu erzeugen, wobei das sechste Produkt zu der ersten Kammer und das siebte Produkt zu dem oberen Ende des Bohrlochs transportiert werden.

17. System nach Anspruch 16, **dadurch gekennzeichnet, daß** das System ferner eine Turbine (20; 240) zur Aufnahme des fünften und des sechsten Produkts aufweist, um exotherme Reaktionen auszuführen, um Energie zu erzeugen.

18. System nach Anspruch 17, **dadurch gekennzeichnet, daß** das fünfte und das siebte Produkt Sauerstoff und Wasserstoff sind.

19. System nach Anspruch 17 oder 18, **dadurch gekennzeichnet, daß** die Turbine (240) eine Verbrennungsturbine (243) aufweist, die mit einem Kondensator (242) verbunden ist.

20. System nach Anspruch 11, **dadurch gekennzeichnet, daß** die Katalysatorvorrichtung (22) zum Gewinnen von Produkten einer endothermen Reaktion aufweist:
einen Katalysator (32), der eine endotherme Reaktion umfaßt, wobei der Katalysator (32) für zumindest eines der Produkte der endothermen Reaktion porös ist;
eine dritte und eine vierte Leitung (26, 24) in Kontakt mit dem Katalysator (32) zum Gewinnen und Verbrennen des ersten und des zweiten Ausgangsprodukts der endothermen Reaktion; und
ein selektives Material (30), daß die dritte Leitung (24) umgibt, wobei das selektive Material nur für das zweite Produkt porös ist.

21. System nach Anspruch 20, **dadurch gekennzeichnet, daß** die dritte und die vierte Leitung (26, 24) innerhalb des Katalysators (32) liegen.

22. System nach Anspruch 20, **dadurch gekennzeichnet, daß** die vierte Leitung (26) innerhalb des Katalysators (32) liegt, und die dritte Leitung (24) am Rand des Katalysators (32) liegt.

23. System nach Anspruch 22, **dadurch gekennzeichnet, daß** die dritte und die vierte Leitung (24, 26) im Querschnitt halbkreisförmig mit ebenen Wandabschnitten (146) sind, die miteinander verbunden sind.

24. System nach Anspruch 23, **dadurch gekennzeichnet, daß** die dritte und die vierte Leitung (24, 26) porös ist, um jeweils ein erstes Produkt und ein zweites Produkt der Elektrolyse aufzunehmen, wobei die dritte Leitung (24) nur für das erste Produkt porös ist.

25. System nach Anspruch 1, **gekennzeichnet durch** eine Verbrennungsturbine (240), wobei die Erdwärme ein erstes und ein zweites Produkt am Boden eines Bohrlochs (12) in der Tiefe erzeugt, in der die Erdwärme ausreichend ist, um eine endotherme Reaktion zu verursachen, mit
einer Verbrennungsturbine (243) zur separaten Aufnahme des ersten und des zweiten Produkts von dem Boden des Bohrlochs (12), wobei die Turbine **durch** die Energie angetrieben wird, die **durch** eine exotherme Reaktion zwischen dem ersten und dem zweiten Produkt freigesetzt wird; und
einem Kondensator (242), der mit der Verbrennungsturbine (243) zur Kondensation des Produkts der exothermen Reaktion verbunden ist, um den Rückdruck an dem Ausgang de Verbrennungsturbine zu reduzieren.

26. System nach Anspruch 25, **dadurch gekennzeichnet, daß** die Verbrennungsturbine (240) ferner einen Kompressor (241) aufweist, der mit dem Einlaß der Verbrennungsturbine (243) verbunden ist.

27. System nach Anspruch 25 oder 26, **dadurch gekennzeichnet, daß** die Produkte die von der Turbine aufgenommen werden, den Wasserstoff und den Sauerstoff zu Dampf umwandeln.

28. System nach Anspruch 25, **dadurch gekennzeichnet, daß** der Kondensator (242) den Dampf in flüssiges Wasser umwandelt und das flüssige Wasser dem System wieder zuführt.

## Revendications

1. Système permettant de capturer la chaleur géothermique et de libérer la chaleur par des réactions exothermiques pour la transformer en électricité, comprenant :
un puits (12) présentant un sommet et un fond, ledit puits étant foré à une profondeur suffisante pour acquérir de l'énergie à partir de la chaleur géothermique lors de l'insertion de réactifs d'entrée dans ledit puits pour provoquer des réactions desdits réactifs ;
un dispositif (22) situé dans le fond dudit puits, ledit dispositif capturant la chaleur géothermique pour récolter et séparer les produits de sortie ;
des première (27) et deuxième (25) conduites pour transporter lesdits produits de sortie vers le sommet dudit puits ;
des troisième (24) et quatrième (26) conduites résidant dans ledit dispositif (22) pour recevoir lesdits produits de sortie, selon lesquelles au moins une desdites troisième et quatrième conduites (24, 26) est perméable à un seul desdits produits de sortie ; et
des moyens (20) couplés aux dites première et deuxième conduites (27, 25) pour utiliser les produits de sortie pour créer des réactions exothermiques pour générer une puissance.

2. Système selon la revendication 1, **caractérisé en ce que** ledit puits (12) est couplé à un premier réservoir de stockage (14) pour stocker lesdits réactifs d'entrée.

3. Système selon la revendication 1 ou la revendication 2, **caractérisé en ce que** ledit système comprend, en outre, un deuxième dispositif de stockage (16) couplé à ladite première conduite (27) pour stocker un premier produit de sortie.

4. Système selon l'une quelconque des revendications 1 à 3, **caractérisé en ce que** ledit système comprend, en outre, un troisième dispositif de stockage (18) couplé à ladite deuxième conduite (25) pour stocker un deuxième produit de sortie.

5. Système selon l'une quelconque des revendications 1 à 4, **caractérisé en ce que** ledit moyen (20) couplé auxdites première et deuxième conduites (27, 25) comprend une turbine à combustion (240) couplée à un condenseur (242).

6. Système selon la revendication 5, **caractérisé en ce que** ladite turbine (240) comprend, en outre, un compresseur (241) couplé à l'entrée de ladite turbine.

7. Système selon la revendication 5 ou la revendication 6, **caractérisé en ce que** la sortie dudit condenseur (242) est couplée à une premier réservoir de stockage (14) pour stocker lesdits réactifs.

8. Système selon l'une quelconque des revendications 1 à 7, **caractérisé en ce que** le puits est foré dans des zones de fracture (50) de roche sèche et chaude.

9. Système selon l'une quelconque des revendications 1 à 8, **caractérisé en ce que** les produits de sortie sont des produits endothermiques obtenus par réactions endothermiques.

10. Système selon la revendication 9, **caractérisé en ce que** la réaction endothermique est la décomposition de l'eau.

11. Système selon l'une quelconque des revendications 1 à 10, **caractérisé en ce que** le dispositif (22) est un dispositif catalytique.

12. Système selon la revendication 11, **caractérisé en ce que** ledit dispositif catalytique (22) comprend un catalyseur (28) poreux vis à vis des premier et deuxième produits des réactions endothermiques, ladite quatrième conduite (26) dans ledit catalyseur pour recevoir ledit premier produit, ladite troisième conduite (24) dans ledit catalyseur pour recevoir ledit deuxième produit, et un matériau sélectif (30) entourant ladite troisième conduite (24) selon lequel ledit matériau sélectif (30) n'est poreux que vis à vis dudit deuxième produit.

13. Système selon la revendication 12, **caractérisé en ce que** ladite quatrième conduite (26) est couplée à la première conduite (27) pour transporter ledit premier produit jusqu'au sommet dudit puits (12), et ladite troisième conduite (24) est couplée à la deuxième conduite (25) pour transporter ledit deuxième produit jusqu'au sommet dudit puits (12).

14. Système selon la revendication 11, **caractérisé en ce que** ledit dispositif catalytique (22) comprend un catalyseur (28) poreux uniquement vis à vis d'un premier produit des réactions endothermiques, ladite quatrième conduite (26) dans ledit catalyseur pour recevoir ledit premier produit, au moins une dite troisième conduite (24) fixée audit catalyseur (28) pour recevoir un deuxième produit des réactions endothermiques, et un matériau sélectif (30) entourant ladite troisième conduite (24) selon lequel ledit matériau sélectif (30) n'est poreux que vis à vis dudit deuxième produit.

15. Système selon la revendication 11, **caractérisé en ce que** ladite troisième conduite (24) comprend un catalyseur (28) poreux uniquement vis à vis d'un premier produit de ladite réaction endothermique, et ladite quatrième conduite (26) est une conduite de retour (36) s'étendant au-delà de l'extrémité dudit dispositif catalytique (22) pour récupérer les produits restants de ladite réaction endothermique, ladite conduite de retour (36) imperméable audit premier produit.

16. Système pour capturer la chaleur géothermique en utilisant les réactions endothermiques et en libérant la chaleur par des réactions exothermiques pour la transformer en électricité, **caractérisé par** :
un puits (12) présentant un sommet et un fond, ledit puits étant foré à une profondeur suffisante pour acquérir de l'énergie à partir de la chaleur géothermique lors de l'insertion de réactifs d'entrée dans ledit puits pour provoquer des réactions desdits réactifs ;
une première chambre (60) placée au fond dudit puits pour recevoir une pluralité de réactifs, dans laquelle lesdits réactifs produisent un premier produit et un deuxième produit ;
une deuxième chambre (68) placée au fond dudit puits pour recevoir ledit premier produit de ladite première chambre, dans laquelle ledit premier produit se décompose pour produire un troisième, quatrième et cinquième produit, lesdits troisième et quatrième produits étant transportés jusqu'à ladite première chambre, et ledit cinquième produit étant transporté jusqu'au sommet dudit puits (12) ; et
une troisième chambre (78) placée au fond dudit puits pour recevoir ledit deuxième produit de ladite première chambre (60), dans laquelle ledit deuxième produit se décompose pour produire un sixième produit et un septième produit, ledit sixième produit étant transporté jusqu'à ladite première chambre, et ledit septième produit étant transporté jusqu'au sommet dudit puits.

17. Système selon la revendication 16, **caractérisé en ce que** ledit système comprend, en outre, une turbine (20 ; 240) pour recevoir ledit cinquième et ledit septième produits pour créer des réactions exothermiques pour générer de la puissance.

18. Système selon la revendication 17, **caractérisé en ce que** lesdits cinquième et septième produits sont de l'oxygène et de l'hydrogène.

19. Système selon les revendications 17 ou 18, **caractérisé en ce que** ladite turbine (240) comprend une turbine à combustion (243) couplée à un condenseur (242).

20. Système selon la revendication 11, **caractérisé en ce que** le dispositif catalytique (22) pour récolter les produits d'une réaction endothermique comprend :
un catalyseur (32) pour comprendre une réaction endothermique, selon lequel ledit catalyseur (32) est poreux au moins vis à vis d'un des produits de la réaction endothermique ;
lesdites troisième et quatrième conduites (26, 24) en contact avec ledit catalyseur (32) pour récolter et séparer les premier et deuxième produits de sortie de la réaction endothermique ; et
un matériau sélectif (30) entourant ladite troisième conduite (24) selon lequel ledit matériau sélectif est poreux uniquement vis à vis du deuxième produit.

21. Système selon la revendication 20, **caractérisé en ce que** lesdites troisième et quatrième conduites (26, 24) se situent à l'intérieur dudit catalyseur (32).

22. Système selon la revendication 20, **caractérisé en ce que** ladite quatrième conduite (26) se situe à l'intérieur dudit catalyseur (32), et ladite troisième conduite (24) se situe au niveau du périmètre dudit catalyseur (32).

23. Système selon la revendication 22, **caractérisé en ce que** lesdites troisième et quatrième conduites (24, 26) sont semi-circulaires en coupes transversales avec des parties de parois planes (146) qui sont couplées ensemble.

24. Système selon la revendication 23, **caractérisé en ce que** lesdites troisième et quatrième conduites (24, 26) sont poreuses pour recevoir respectivement un premier produit et un deuxième produit d'électrolyse, ladite troisième conduite (24) étant poreuse uniquement vis à vis du premier produit.

25. Système selon la revendication 1, **caractérisé par** une turbine de combinaison (240) selon lequel la chaleur géothermique produit des premier et deuxième produits au fond d'un puits (12) à une profondeur à laquelle ladite chaleur géothermique est suffisante pour provoquer une réaction endothermique, comprenant
une turbine à combustion (243) pour recevoir séparément lesdits premier et deuxième produits à partir du fond dudit puits (12) et étant entraînée par l'énergie libérée par une réaction exothermique entre lesdits premier et deuxième produits ; et
un condenseur (242) couplé à ladite turbine à combustion (243) pour condenser le produit de ladite réaction exothermique pour réduire la contre-pression au niveau de la sortie de ladite turbine à combustion.

26. Système selon la revendication 25, **caractérisé en ce que** ladite turbine de combinaison (240) comprend, en outre, un compresseur (241) couplé à l'entrée de ladite turbine à combustion (243).

27. Système selon les revendications 25 ou 26, **caractérisé en ce que** les produits reçus par ladite turbine transforment l'hydrogène et l'oxygène en vapeur.

28. Système selon la revendication 25, **caractérisé en ce que** ledit condenseur (242) transforme ladite vapeur en eau liquide et renvoie l'eau liquide au système.
